# EUROPEAN PATENT SPECIFICATION

(11) **EP 3 687 286 B1**
(45) Date of publication and mention of the grant of the patent: **13.03.2024**
(21) Application number: 18772829.0
(22) Date of filing: 26.09.2018
(51) Int. Cl.: A01K 61/60

(54) **SEMI-SUBMERSIBLE SPAR-TYPE OFFSHORE FISH FARM WITH DETACHABLE AND PIVOTABLE COUPLING ASSEMBLY**
HALBTAUCHENDE OFFSHORE-FISCHFARM VOM HOLMTYP MIT ERFASSBARER UND SCHWENKBARER KOPPLUNGSANORDNUNG
PISCICULTURE OFFSHORE DE TYPE SPAR SEMI-SUBMERSIBLE AVEC ENSEMBLE DE COUPLAGE AMOVIBLE ET PIVOTANT

(30) Priority: 28.09.2017 EP 17193670
(43) Date of publication of application: 05.08.2020
(73) Proprietor: Saulx Offshore, 6221 BT Maastricht (NL)
(72) Inventor: VAN LEEUWEN, Mark Rudolf, 6221 BT Maastricht (NL)
(74) Representative: IPecunia
(86) International application number: PCT/EP2018/076142
(87) International publication number: WO 2019/063624

(56) References cited:
- WO-A1-96/29860
- FR-A1- 2 596 613
- US-A1- 2012 167 829
- US-A1- 2017 238 511

## Description

### FIELD OF THE INVENTION

The present invention relates to a semi-submersible spar-type offshore fish farm for cultivating fish at open sea.

### BACKGROUND OF THE INVENTION

Aquaculture is the farming of aquatic organisms including fish, mollusks, crustaceans and aquatic plants. Farming implies some form of intervention in the rearing process to enhance production, such as regular stocking, feeding, protection from predators. Aquaculture involves cultivating freshwater and saltwater populations under controlled conditions, and can be contrasted with commercial fishing, which is the harvesting of wild fish. Particular kinds of aquaculture include fish farming, shrimp farming, oyster farming, mariculture, algaculture, and the cultivation of ornamental fish. Fish farming using inshore fish farms in freshwater and offshore fish farms in saltwater is well known. An advantage of offshore fish farms is that deep-water cages can be used that have a large harvesting volume. Another advantage is that the deep-water cages can be kept away from coastal pollution areas. As a result, a good farming environment can be provided which is the basis for harvesting high-quality cultured fish.

Although there are many different types of fish farms, both inshore and offshore, the present invention relates to a semi-submersible spar-type offshore fish farm for cultivating fish at open sea comprising an elongated center column having one of a circular and polygonal cross-section and a semi-submersible netted rigid cage that is coaxially arranged around the elongated center column. This kind of cage can be submerged during heavy storms or typhoons to prevent damage to at least one of the cage and the offshore fish farm. While being submersed, this kind of cage is far less exposed to harsh sea conditions and hence far less subjected to physical stress. As a result, this kind of cage can be lighter and can have a less complicated structure. Moreover, the reduced movement of the cage reduces damage to stocks.

In order to enable larger harvesting volumes, the diameter of the semi-submersible netted rigid cage can be increased. However, the design, construction and transportation of known semi-submersible spar-type offshore fish farms would not allow a further increase of the diameter of the semi-submersible netted rigid cages. Construction and transportation are cumbersome as a result of the significant diameter of the semi-submersible spar-type offshore fish farm and the netted rigid cage in particular. For building such fish farms having a total diameter of 100m, the availability of dock sizes, construction bay sizes and gantry crane widths is very limited. For semi-submersible spar-type offshore fish farms having a total diameter above 120m, only a couple of yards are able to build them and for diameters above 130m there is no yard available that is able to build them in a dry dock or under a gantry crane.

Furthermore, transportation vessels do not necessarily need to have the same width as the total diameter of the semi-submersible spar-type offshore fish farms and therefore can be significantly smaller. However, in that case transportation of such fish farms is seriously hampered by the overhang of the netted rigid cage that cannot touch or go through the water surface as a result of roll and pitch motions of the transportation vessel when the vessel is sailing.

Patent application US2012/0167829 discloses a fish pen including an elongate spar buoy and a reserve buoyancy buoy disposed over a top end of the spar buoy. Lower and upper rim assemblies are attached to the spar buoy and each other with tension members. An adjustable upper connection plate on the spar buoy provides a means for tensioning the tension members. A docking station and portal provide easy access to the fish pen. A deployable panel system allows for crowding fish into a smaller portion of the pen.

In the current design of known semi-submersible spar-type offshore fish farms, elongated connecting elements, also indicated as radials, are used to interconnect for example the elongated center column and a first frame of the semi-submersible netted rigid cage in a similar way as spokes in a wheel. In the current design, each elongated connecting element is fixedly connected, e.g. welded, with one of its end parts to a buoyancy sleeve of the semi-submersible spar-type offshore fish farm. The other end part of each elongated connecting element is connected to the top of the buoyancy sleeve by means of wire rope, e.g. steel or any other suitable material. Besides vertical loads, this results in significant loads on the buoyancy sleeve and torque on the buoyancy sleeve connections. Increasing the length of the elongated connecting elements will increase the diameter and hence the harvesting volume of the semi-submersible netted rigid cage. However, this also gives rise to increased vertical loads and torque acting on the buoyancy sleeve and the connections. Consequently, at least the connections between the elongated connecting elements and the buoyancy sleeve have a reduced life time due to fatigue caused by high stress cycles as a result of increased load variations.

### SUMMARY OF THE INVENTION

It is an object of the present invention to provide a semi-submersible spar-type offshore fish farm for cultivating fish at open sea that pre-empts or at least reduces at least one of the abovementioned and/or other disadvantages associated with semi-submersible spar-type offshore fish farms known in the art.

This object is solved, according to the invention, by the provision of a semi-submersible spar-type offshore fish farm comprising the technical features of independent claim 1. Preferred embodiments of the invention are set out in the dependent claims.

At least one of the abovementioned objects is achieved by a semi-submersible spar-type offshore fish farm for cultivating fish at open sea, comprising an elongated center column having one of a circular and polygonal cross-section and a semi-submersible netted rigid cage. The elongated center column comprising a first end part and a second end part, a buoyancy sleeve and a harvesting sleeve that are coaxially arranged around the elongated center column, wherein the buoyancy sleeve is arrangeable at positions along the elongated center column between the first end part and the harvesting sleeve and the harvesting sleeve is arrangeable at positions along the elongated center column between the buoyancy sleeve and the second end part. The semi-submersible netted rigid cage comprises a first frame that is coaxially arranged around the elongated center column, a first set of elongated connecting elements, wherein each elongated connecting element of the first set of elongated connecting elements is arranged to interconnect the buoyancy sleeve and the first frame via at least one detachable and pivotable coupling assembly. The semi-submersible netted rigid cage comprises a second frame that is coaxially arranged around the elongated center column and, in use of said fish farm, is arranged below the first frame, a second set of elongated connecting elements, wherein each elongated connecting element of the second set of elongated connecting elements is arranged to interconnect the first frame and the second frame. The semi-submersible netted rigid cage comprises a third frame that is coaxially arranged around the elongated center column between the first frame and the second frame, a third set of elongated connecting elements, wherein each elongated connecting element of the third set of elongated connecting elements is arranged to interconnect the harvesting sleeve and the third frame via at least one detachable and pivotable coupling assembly.

By connecting the elongated connecting elements of the first set of elongated connecting elements and the buoyancy sleeve via detachable and pivotable coupling assemblies, the elongated coupling elements of the first set of elongated connecting elements and the buoyancy sleeve can move relative to each other instead of being fixedly connected. The same applies to the elongated connecting elements of the third set of elongated connecting elements that are connected with the harvesting sleeve via detachable and pivotable coupling assemblies. In this way, the connections between the elongated connecting elements of the first set of elongated connecting elements and the buoyancy sleeve have an improved life time due to reduced fatigue because of decreased stress cycles as a result of decreased load variations. The same applies to the connections between the elongated connecting elements of the third set of elongated connecting elements and the harvesting sleeve.

Furthermore, because of the fact that the pivotable coupling assembly is detachable, the elongated connecting elements of the respective first and third sets of elongated connecting elements can be assembled and disassembled. In this way they can be transported as separate pieces and installed at the desired location at sea of the semi-submersible spar-type offshore fish farm according to the invention. Hence, problems regarding transportation of the semi-submersible spar-type offshore fish farm can be mitigated.

The detachable and pivotable coupling assembly comprises a first part and a second part that are detachably connectable via at least a first coupling element that is arranged to provide a first pivot axis around which the first part and the second part are pivotable with respect to each other. In this way an elongated connecting element of the first set of elongated connecting elements, in use of the fish farm, is pivotable with respect to the buoyancy sleeve in radial directions of the elongated center column. Likewise, an elongated connecting element of the third set of elongated connecting elements, in use of the fish farm, is pivotable with respect to the harvesting sleeve in radial directions of the elongated center column. The person skilled in the art will appreciate that the first coupling element can be any suitable coupling element that can provide the first pivot axis that enables the abovementioned pivoting movements of the first part and the second part of the detachable and pivotable coupling assembly. The person skilled in the art will appreciate that the detachable and pivotable coupling assembly can comprise more than one first parts and more than one second parts depending on the requirements for the semi-submersible spar-type offshore fish farm, e.g. for the sake of redundancy to improve reliability.

According to the invention, at least one of the first part and the second part of the detachable and pivotable coupling assembly is provided with at least a second coupling element that is arranged to provide a second pivot axis that is directed transversely with respect to the first pivot axis. By providing the second coupling element, an elongated connecting element of the first set of elongated connecting elements, in use of the fish farm, is also pivotable with respect to the buoyancy sleeve in circumferential directions of the elongated center column. Hence, an elongated connecting element of the first set of elongated connecting elements can, in use of the fish farm, move with respect to the buoyancy sleeve in orthogonal directions, e.g. in radial directions and in circumferential directions of the elongated center column. The movements in radial and circumferential directions of the elongated center column can also be referred to as movements in pitch and yaw. These directions of movement are the most important directions regarding improvement of the life time of the connections between the elongated connecting elements of the first set of elongated connecting elements and the buoyancy sleeve. An analogous reasoning holds for the elongated connecting elements of the third set of elongated connecting elements that are pivotable with respect to the harvesting sleeve in both radial and circumferential directions of the elongated center column.

The person skilled in the art will appreciate that the second coupling element can be any suitable coupling element that can provide a second pivot axis that is directed transversely with respect to the first pivot axis and that enables the abovementioned movements of the elongated connecting elements of the first set of elongated connecting elements and the buoyancy sleeve, and the elongated connecting elements of the third set of elongated connecting elements and the harvesting sleeve.

In an embodiment of the semi-submersible spar-type offshore fish farm according to the invention, at least one of the first frame comprises a first set of frame sections that are connected to each other to form a first closed structure, the second frame comprises a second set of frame sections that are connected to each other to form a second closed structure, and the third frame comprises a third set of frame sections that are connected to each other to form a third closed structure. In this way, at least one of the respective first, second, and third frames can be assembled and disassembled. This enables that they are transported as separate pieces and installed at the desired location at sea of the semi-submersible spar-type offshore fish farm. As a result, problems regarding transportation of the semi-submersible spar-type offshore fish farm can be mitigated.

In an embodiment of the semi-submersible spar-type offshore fish farm according to the invention, at least one of the first frame, the second frame and the third frame have buoyant properties and have one of a circular and polygonal shape. By providing at least one of the first frame, the second frame and the third frame with buoyant properties, they can carry at least their own weight. The person skilled in the art will appreciate that the buoyant properties can be provided in any suitable way, e.g. by using a tubular lattice structure for at least one of the first frame, the second frame and the third frame.

In an embodiment of the semi-submersible spar-type offshore fish farm according to the invention, the first part of the detachable and pivotable coupling assembly is arranged at least at one of a surface of the buoyancy sleeve that in use of said fish farm faces away from the elongated center column, a surface of the harvesting sleeve that in use of said fish farm faces away from the elongated center column, a surface of at least one frame section of the first set of frame sections of the first frame, and a surface of at least one frame section of the third set of frame sections of the third frame. The person skilled in the art will appreciate that the first part of the detachable and pivotable coupling assembly can be arranged at any desired location depending on specific design requirements for the semi-submersible spar-type offshore fish farm.

In an embodiment of the semi-submersible spar-type offshore fish farm according to the invention, the second part of the detachable and pivotable coupling assembly is arranged at least at one end part of an elongated connecting element of the first set of elongated connecting elements and/or at least at one end part of an elongated connecting element of the third set of elongated connecting elements.

The person skilled in the art will appreciate that if for example the elongated connecting elements of the first set of elongated connecting elements are provided with second parts of the detachable and pivotable coupling assembly at both of their respective end parts, and the buoyancy sleeve and the frame sections of the first set of frame sections of the first frame are provided with first parts of the detachable and pivotable coupling assembly, upon assembly, the detachable and pivotable coupling assemblies interconnect the elongated connecting elements of the first set of elongated connecting elements with both the buoyancy sleeve and the frame sections of the first set of frame sections of the first frame.

Analogously, the detachable and pivotable coupling assemblies can be used to interconnect elongated connecting elements of the third set of elongated connecting elements with at least one of the harvesting sleeve and at least one frame section of the third set of frame sections of the third frame. The person skilled in the art will appreciate that many more configurations are conceivable depending on the requirements for the semi-submersible spar-type offshore fish farm.

In an embodiment of the semi-submersible spar-type offshore fish farm according to the invention, the semi-submersible netted rigid cage has a diameter in a range between 80m and 180m. The person skilled in the art will appreciate that for diameters in the aforementioned range it is advantageous at least for transportation of the semi-submersible spar-type offshore fish farm that said fish farm can be assembled at the desired location at sea. Among others this can be achieved by interconnecting the frame sections of the first set of frame sections of the first frame of the semi-submersible netted rigid cage with the buoyancy sleeve using the detachable and pivotable coupling assemblies and the elongated connecting elements of the first set of elongated connecting elements. Analogously, the frame sections of the third set of frame sections of the third frame of the semi-submersible netted rigid cage can be interconnected with the harvesting sleeve using the detachable and pivotable coupling assemblies and the elongated connecting elements of the third set of elongated connecting elements.

In an embodiment of the semi-submersible spar-type offshore fish farm according to the invention, the elongated connecting elements of at least one of the first set of elongated connecting elements and the third set of elongated connecting elements have a tubular lattice structure. In this way, the elongated connecting elements can carry at least their own weight, the weight of the nets and the weight of the respective first, second and third frames of the semi-submersible netted rigid cage.

In an embodiment of the semi-submersible spar-type offshore fish farm according to the invention, said fish farm is provided with at least one of a first platform that, in use of said fish farm, is arranged adjacent to the elongated center column and a second platform that is connected with the first frame. The first platform and the second platform can be used by operators of the semi-submersible spar-type offshore fish farm. The first platform and the second platform can be interconnected by at least one walkway that can be arranged on an elongated connecting element of the first set of elongated connecting elements. The person skilled in the art will appreciate that the walkway can be configured and arranged in any suitable way to interconnect the first platform and the second platform.

In an embodiment of the semi-submersible spar-type offshore fish farm according to the invention, the first frame is provided with at least a first net that, in use of said fish farm, provides a top net of the semi-submersible netted rigid cage, the first frame and the second frame are further interconnected via at least a second net that, in use of said fish farm, provides a circumferential side net of said cage, wherein the second frame is provided with at least a third net that, in use of said fish farm, provides a bottom net of said cage, and wherein the third frame is provided with at least a fourth net that, in use of said fish farm, provides a harvesting net of said cage.

In an embodiment of the semi-submersible spar-type offshore fish farm according to the invention, in use of said fish farm, the first frame is arrangeable along the elongated center column at positions above and below sea level, the second frame is arrangeable along the elongated center column at positions below sea level, and the third frame is arrangeable along the elongated center column at positions between the first frame and the second frame.

The person skilled in the art will appreciate that depending on sea conditions it is possible to position the semi-submersible netted rigid cage partially above sea level, for example for harvesting fish during calm sea conditions, and to position said cage completely below sea level, for example when heavy storms or typhoons are expected. In the latter case, said cage is moved to a position beyond a top layer of the seawater where the conditions in the top layer have a limited or ideally no negative effect on said cage and the fish stock that is contained within it. Moving of the semi-submersible netted rigid cage is accomplished by ballasting the center column of the fish farm.

To harvest at least part of the fish stock, the harvesting net that is attached to the third frame can be raised towards the sea level by raising the harvesting sleeve. After harvesting the desired amount of fish, the harvesting net can be lowered, for example under the influence of gravity.

In an embodiment of the semi-submersible spar-type offshore fish farm according to the invention, the first end part of the elongated center column is provided with a control facility that in use of said fish farm remains positioned above sea level and the second end part of the elongated center column is provided with a ballast system that in use of said fish farm remains positioned below sea level. The control facility comprises at least one of an equipment room and a residence room or living quarter for operators of the fish farm. When the semi-submersible netted rigid cage is positioned completely below sea level, only the control facility remains above sea level. In this way only a relatively small part of the total fish farm is exposed to rough weather conditions. As a result, the risk of damage to the fish farm can be significantly reduced. The ballast system provides buoyancy and stability to the fish farm.

In an embodiment of the semi-submersible spar-type offshore fish farm according to the invention, the ballast system comprises at least one buoyancy tank and at least one of a ballast tank that is connected to the buoyancy tank and at least one clump weight that is connected to the buoyancy tank. In the event that a ballast tank is provided, the ballast tank can be connected to the bottom of the buoyancy tank directly or it can be integrated into the buoyancy tank. The ballast tank can be filled or emptied according to the desired draft for the center column of the fish farm. The at least one clump weight can be filled with any suitable material, e.g. steel, concrete or lead, or any suitable combination of materials.

In an embodiment of the semi-submersible spar-type offshore fish farm according to the invention, the semi-submersible spar-type offshore fish farm comprises at least one of a harvest system, a power system, a mooring system, a boat landing system, a docking system, a dead fish removal system and a feeding system. The person skilled in the art will appreciate that the fish farm according to the invention is a versatile and self-sufficient fish farm.

### BRIEF DESCRIPTION OF THE DRAWINGS

Further features and advantages of the invention will become apparent from the description of the invention by way of exemplary and non-limiting embodiments of a semi-submersible spar-type offshore fish farm according to the invention.

The person skilled in the art will appreciate that the described embodiments are exemplary in nature only and not to be construed as limiting the scope of protection in any way. The person skilled in the art will realize that alternatives and equivalent embodiments of the semi-submersible spar-type offshore fish farm can be conceived and reduced to practice without departing from the scope of protection of the present invention defined by the appended claims.

Reference will be made to the figures on the accompanying drawing sheets. The figures are schematic in nature and therefore not necessarily drawn to scale. Furthermore, equal reference numerals denote equal or similar parts. On the attached drawing sheets,
figure 1A shows a schematic side view of a first exemplary, non-limiting embodiment of a semi-submersible spar-type offshore fish farm according to the invention;
figure 1B shows a schematic perspective view of a simplified version of the first exemplary, non-limiting embodiment of a semi-submersible spar-type offshore fish farm shown in figure 1A;
figure 2A shows a schematic perspective view of a first exemplary, non-limiting embodiment of a detachable and pivotable coupling assembly;
figure 2B shows a schematic side view of the first exemplary, non-limiting embodiment of the detachable and pivotable coupling assembly shown in figure 2A;
figure 3 shows a schematic perspective view of a first exemplary, non-limiting embodiment of a connection of two frame sections of a first set of frame sections of a first frame of a semi-submersible netted rigid cage of the semi-submersible spar-type fish farm according to the invention; and
figure 4 shows a schematic perspective view of a first exemplary, non-limiting embodiment of a connection of two frame sections of a second set of frame sections of a second frame of a semi-submersible netted rigid cage of the semi-submersible spar-type fish farm according to the invention.

### DETAILED DESCRIPTION OF EMBODIMENTS

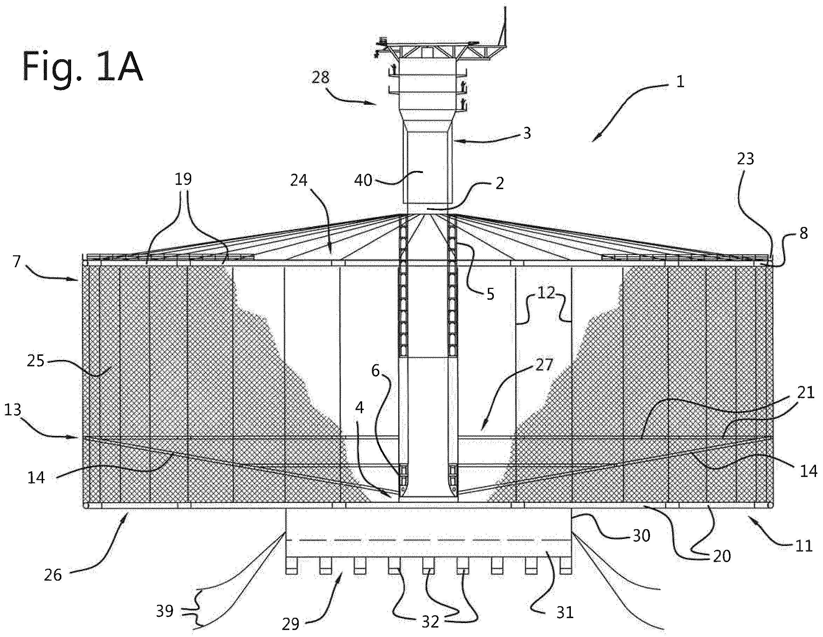

Figure 1A shows a schematic side view of a first exemplary, non-limiting embodiment of a semi-submersible spar-type offshore fish farm 1 according to the invention. The fish farm 1 comprises an elongated center column 2 that has a circular cross-section. The elongated center column 2 has a first end part 3 and a second end part 4. The first end part 3 is provided with a control facility 28 that in use of the fish farm 1 remains positioned above sea level. The control facility 28 comprises an equipment room and a residence room or living quarter for operators of the fish farm 1. The person skilled in the art will appreciate that the control facility can comprise any system or equipment that is suitable to be located therein and that is required for the operation of the semi-submersible spar-type fish farm 1. Examples of such systems or equipment, which are not explained in further detail nor are shown in the appended figures, are power systems, generators, e.g. solar generators, switch boards, systems related to the fuel tanks and the oil tanks, piping systems, cable systems, and fishfarming supporting systems such as CCTV (above and below sea level), communication systems comprising for example radio devices, GPS, a radar system, a telephone system, a broadcasting system and an alarm system. Figure 1A also shows a helicopter landing platform that is provided on the roof of the control facility 28.

Although not explained in further detail nor shown in the appended figures, the person skilled in the art will also appreciate that the semi-submersible spar-type offshore fish farm 1 can comprise at least one of a harvesting system, a mooring system, a boat landing system, a docking system, a dead fish removal system and a feeding system.

Figure 1A furthermore shows that the second end part 4 of the elongated center column 2 is provided with a ballast system 29 that in use of the fish farm 1 remains positioned below sea level and provides buoyancy and stability to the center column 2 of the fish farm 1. The ballast system 29 shown in figure 1A comprises a buoyancy tank 30 and multiple clump weights 32 that are attached to the bottom of the buoyancy tank 30. The person skilled in the art will appreciate that it is also possible to connect the multiple clump weights 32 with the buoyancy tank 30 in a suspended way. Moreover, it is possible to apply one clump weight that is either attached to the buoyancy tank 30 or connected with the buoyancy tank 30 in a suspended way. Furthermore, the person skilled in the art will appreciate that although not explicitly described in further detail nor shown in the appended figures, the ballast system 29 can comprise at least one of ballast/de-ballast pumps, piping systems, ventilation systems, valve systems, level gaging systems and air compressors that in use of the fish farm enable ballasting or de-ballasting operations for allowing the center column 2 of the fish farm to float upwards or to dive downwards. Figure 1A also shows that the ballast system 29 is provided with anchor cables 39 that are configured and arranged to connect the center column 2 of the fish farm 1 when it is in use with the seabed in order to keep the fish farm 1 positioned at its desired location.

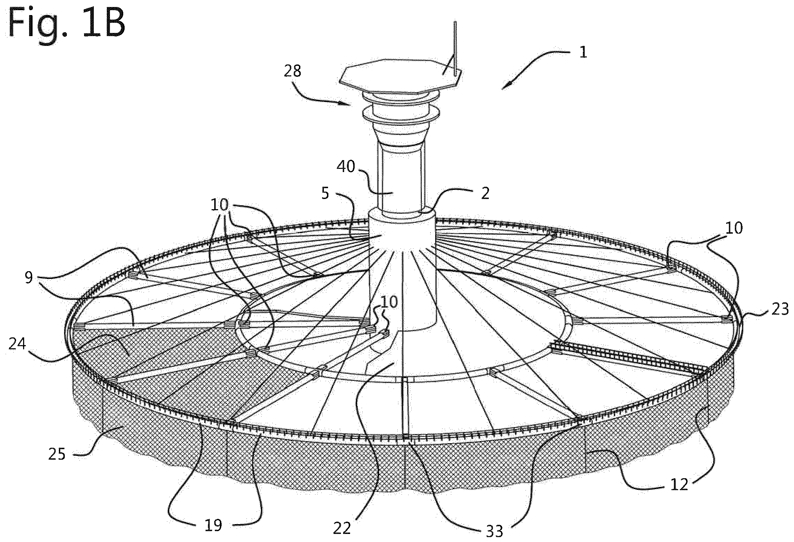

The elongated center column 2 shown in figure 1A further comprises a buoyancy sleeve 5 and a harvesting sleeve 6 that are coaxially arranged around the elongated center column 2. The buoyancy sleeve 5 is arrangeable at positions along the elongated center column 2 between the first end part 3 and the harvesting sleeve 6. The person skilled in the art will appreciate that depending on the requirements for the fish farm 1, the buoyancy sleeve 5 can be arranged at a fixed position on the elongated center column 2 between the first end part 3 and the harvesting sleeve 6. In this case the buoyancy sleeve 5 cannot move along the elongated center column 2. On the contrary, it is also possible that the buoyancy sleeve 5 can be arranged at several positions along the elongated center column 2 between the first end part 3 and the harvesting sleeve 6. As the buoyancy sleeve 5 is naturally buoyant, the aforementioned positioning of the buoyancy sleeve 5 can be achieved by filling or emptying the ballast tank 31 which is part of the ballast system 29 that is connected to the second end part 4 of the elongated center column 2. When the ballast tank 31 is filled to submerge the fish farm 1, the buoyancy sleeve 5 at some point is prevented from moving further upwards along the elongated center column 2 by a hard point. In the exemplary, non-limiting embodiment of the fish farm 1 shown in figures 1A and 1B, the hard point is implemented as a limiting sleeve 40. The person skilled in the art will appreciate that the hard point can be implemented in any suitable manner, e.g. by providing the elongated center column 2 with a tapering section that has a larger diameter than the diameter of the buoyancy sleeve 5. Because the buoyancy sleeve 5 is naturally buoyant, there is no need for a separate ballasting system in the buoyancy sleeve 5 other than the mobile deep well pumps.

The harvesting sleeve 6 is arrangeable at several positions along the elongated center column 2 between the buoyancy sleeve 5 and the second end part 4. The harvesting sleeve 6 is not naturally buoyant and will therefore remain under water. It can be moved towards the buoyancy sleeve 5 using at least one of ballasting and a displacement system. By moving the harvesting sleeve 6 towards the buoyancy sleeve 5, fish can be harvested.

The person skilled in the art will appreciate that the buoyancy sleeve 5 and the harvesting sleeve 6 are movable along the elongated center column 2 in any suitable way, for example in a sliding manner under the influence of a displacement system that can be accommodated in the control facility 28. The displacement system can comprise a winch. Furthermore, the person skilled in the art will appreciate that it can be advantageous if at least one of the buoyancy sleeve 5, the harvesting sleeve 6 and the center column 2 is provided with pads comprising a material, e.g. polytetrafluoroethylene (PTFE), that enhances sliding of the buoyancy sleeve 5 and the harvesting sleeve 6 along the center column 2.

The fish farm 1 shown in figure 1A furthermore comprises a semi-submersible netted rigid cage 7 that is coaxially arranged around the elongated center column 2 and can have a diameter in a range between 80m and 180m. The cage 7 comprises a first frame 8 that is coaxially arranged around the elongated center column 2. The first frame 8 comprises a first set of frame sections 19 that are connected to each other to form a first closed structure. The first frame 8 has buoyant properties and has a circular shape. The buoyant properties can be provided in any suitable way, for example by using a tubular lattice structure for the frame sections of the first set of frame sections 19 of the first frame 8.

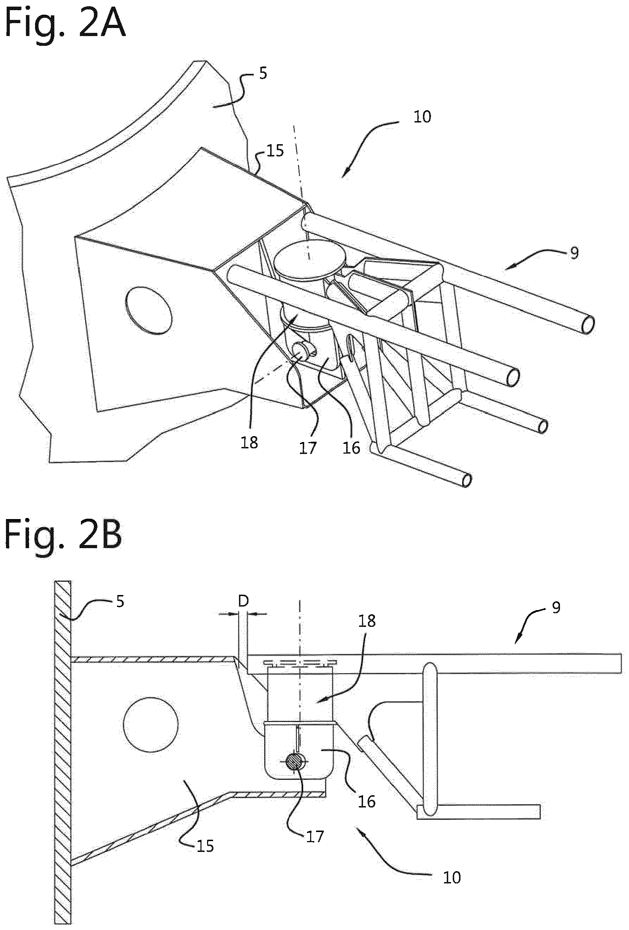

Figure 1B shows a schematic perspective view of a simplified version of the first exemplary, non-limiting embodiment of a semi-submersible spar-type offshore fish farm 1 shown in figure 1A. Figure 1B shows that a first set of elongated connecting elements 9 is provided. Each elongated connecting element of the first set of elongated connecting elements 9 is arranged to interconnect the buoyancy sleeve 5 and the frame sections of the first set of frame sections of the first frame 8 via at least one detachable and pivotable coupling assembly 10. The coupling assembly 10 will be discussed in more detail in relation to figures 2A and 2B.

To provide the elongated connecting elements of the first set of elongated connecting elements 9 with buoyant properties they have a tubular lattice structure. This is schematically shown in figures 2A, 2B, 3 and 4. In this way, the elongated connecting elements are configured to carry at least their own weight and at least part of the weight of at least one of the nets of the semi-submersible netted rigid cage 7 that are connected to them and the respective first frame 8 and the second frame 11 of the semi-submersible netted rigid cage 7. Figure 1A also shows that for the sake of stability of the semi-submersible netted rigid cage 7, end parts of the elongated connecting elements of the first set of elongated connecting elements 9 that are connected with the first frame 8 are also connected with the buoyancy sleeve 5 via a plurality of guy ropes, e.g. steel wire ropes.

Figure 1A shows that the cage 7 further comprises a second frame 11 that is coaxially arranged around the elongated center column 2 and is arranged below the first frame 8. The second frame 11 comprises a second set of frame sections 20 that are connected to each other to form a second closed structure. The second frame 11 has buoyant properties and has a circular shape. The buoyant properties can be provided in any suitable way, for example by using a tubular lattice structure for the frame sections of the second set of frame sections 20 of the second frame 11.

Figure 1A also shows that a second set of elongated connecting elements 12 is provided. Each elongated connecting element of the second set of elongated connecting elements 12 is arranged to interconnect the first frame 8 and the second frame 11. The elongated connecting elements of the second set of elongated connecting elements 12 can be flexible elements such as chains of metal or any other suitable material such as fiber-enforced resilient material.

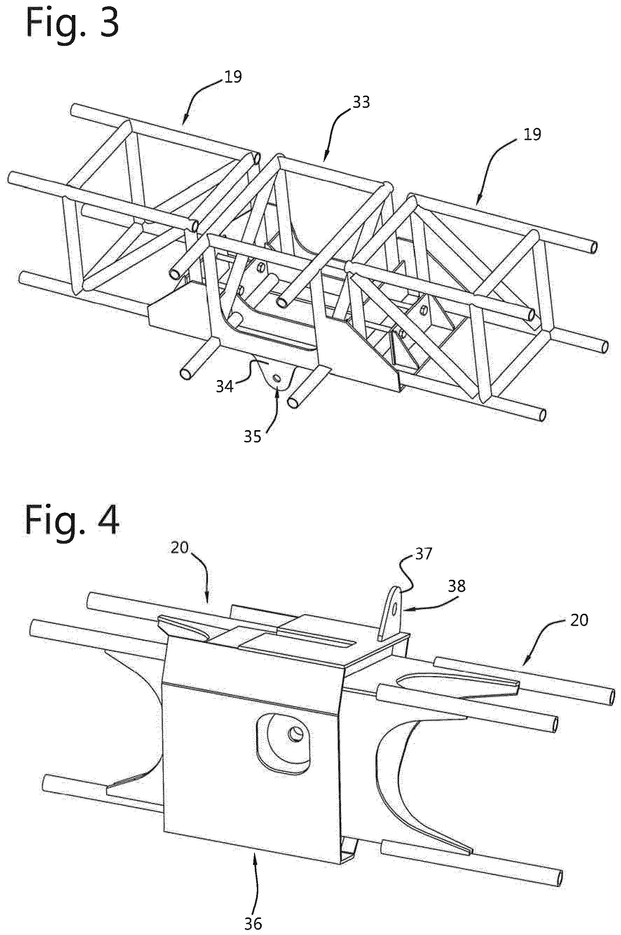

Figure 1A further shows that the cage 7 also comprises a third frame 13 that is coaxially arranged around the elongated center column 2 between the first frame 8 and the second frame 11. The third frame 13 comprises a third set of frame sections 21 that are connected to each other to form a third closed structure. The third frame 13 has buoyant properties and has a circular shape. The buoyant properties can be provided in any suitable way, for example by using a tubular lattice structure for the frame sections of the third set of frame sections 21 of the first frame 13. Furthermore, a third set of elongated connecting elements 14 is provided. Each elongated connecting element of the third set of elongated connecting elements 14 is arranged to interconnect the harvesting sleeve 6 and the third frame 13 via at least one detachable and pivotable coupling assembly 10. To provide the elongated connecting elements of the third set of elongated connecting elements 14 with buoyant properties they can have a tubular lattice structure as is schematically shown in figure 4. In this way, the elongated connecting elements are configured to carry at least their own weight and at least part of the weight of at least one of the nets of the semi-submersible netted rigid cage 7 that are connected to them.

Figure 1B shows that the first exemplary, non-limiting embodiment of the semi-submersible spar-type offshore fish farm 1 is provided with a first platform 22 that is arranged adjacent to the elongated center column 2 and a second platform 23 that is connected with the first frame 8. The first platform 22 and the second platform 23 can be used by operators of the semi-submersible spar-type offshore fish farm. The first platform 22 and the second platform 23 are interconnected by a walkway that is arranged on an elongated connecting element of the first set of elongated connecting elements 9.

Figure 1B shows that the first frame 8 is provided with a first net 24 that provides a top net of the semi-submersible netted rigid cage 7. The person skilled in the art will appreciate that each one of the nets 24, 25, 26, 27 can comprise one or more parts depending on the requirements of the fish farm. Figure 1A shows that the first frame 8 and the second frame 11 are also interconnected via a second net 25 that provides a circumferential side net of said cage 7. Furthermore, figure 1B shows that the second frame 11 is provided with a third net 26 that provides a bottom net of said cage 7. Figure 1B also shows that the third frame 13 is provided with a fourth net 27 that provides a harvesting net of said cage 7. The person skilled in the art will appreciate that each one of the nets 24, 25, 26, 27 can comprise one or more parts depending on the requirements of the fish farm.

From figure 1A it can be derived that the first frame 8 is arrangeable along the elongated center column 2 at positions above and below sea level. Furthermore, it can be derived that the second frame 11 is arrangeable along the elongated center column 2 at positions below sea level and that the third frame 13 is arrangeable along the elongated center column 2 at positions between the first frame 8 and the second frame 11. The person skilled in the art will appreciate that depending on sea conditions it is possible to position the semi-submersible netted rigid cage 7 partially above sea level, for example for harvesting fish during calm sea conditions, and to position said cage completely below sea level, for example when heavy storms or typhoons are expected. The latter can be accomplished by ballasting the center column 2 of the fish farm 1. This is done by filling the ballast tank 31 of the ballast system 29 that is connected with the second end part 4 of the center column 2. When the ballast tank 31 is filled, the buoyancy sleeve 5 at some point is prevented from moving further upwards along the center column 2 by the limiting sleeve 40. Upon further filling of the ballast tank 31, the semi-submersible netted rigid cage 7 can be moved to a position beyond a top layer of the seawater where the conditions in the top layer have a limited or ideally no negative effect on the cage 7 and the fish stock that is contained within it.

To harvest at least part of the fish stock, the harvesting net 27 that is attached to the third frame 13 can be raised towards the sea level by moving the harvesting sleeve 6 towards the buoyancy sleeve 5. After harvesting the desired amount of fish, the harvesting net 27 can be lowered by moving the third frame towards the second end part 4 of the center column 2, for example under the influence of gravity.

Figure 2A shows a schematic perspective view of a first exemplary, non-limiting embodiment of a detachable and pivotable coupling assembly 10. Figure 2B shows a schematic side view of the embodiment of the coupling assembly 10 shown in figure 2A. The coupling assembly 10 can be used to connect for example an elongated connecting element of the first set of elongated connecting elements 9 with the buoyancy sleeve 5 of the semi-submersible spar-type fish farm 1 according to the invention. This is shown in figures 2A and 2B, wherein the first part 15 of the coupling assembly 10 is connected with a surface of the buoyancy sleeve 5 that in use of the fish farm faces away from the elongated center column. The second part 16 of the coupling assembly 10 is arranged at an end part of an elongated connecting element of the first set of elongated connecting elements 9. The person skilled in the art will appreciate that an elongated connecting element of the third set of elongated connecting elements 14 can be connected with the harvesting sleeve 6 in the same way using the detachable and pivotable coupling assembly 10.

Figures 2A and 2B show that the detachable and pivotable coupling assembly 10 comprises a first part 15 and a second part 16 that are detachably connected via a first coupling element 17 that is arranged to provide a first pivot axis around which the first part 15 and the second part 16 are pivotable with respect to each other. When the detachable and pivotable coupling assembly 10 is used to connect an elongated connecting element of for example the first set of elongated connecting elements 9 with the buoyancy sleeve 5 that is arranged around the elongated center column of the semi-submersible spar-type fish farm, the first coupling element 17 allows the first part 15 and the second part 16 to move with respect to each other in radial directions of the elongated center column. In figure 2B a gap D can be seen between the first part 15 of the coupling assembly 10 and the elongated connecting element of the first set of elongated connecting elements 9. The gap D enables the aforementioned movements of the first part 15 and the second part 16 with respect to each other. Likewise, an elongated connecting element of the third set of elongated connecting elements, in use of the fish farm, is pivotable with respect to the harvesting sleeve in radial directions of the elongated center column. The person skilled in the art will appreciate that the first coupling element 17 can be any suitable coupling element that can provide the first pivot axis that enables the abovementioned pivoting movements of the first part 15 and the second part 16 of the coupling assembly 10. The person skilled in the art will appreciate that the coupling assembly 10 can comprise more than one first parts and more than one second parts depending on the requirements for the semi-submersible spar-type offshore fish farm, e.g. for the sake of redundancy to improve reliability.

Moreover, figures 2A and 2B show an exemplary, non-limiting embodiment of the tubular lattice structure for the elongated connecting elements of the first set of elongated connecting elements 9. The person skilled in the art will appreciate that the elongated connecting elements of the third set of elongated connecting elements can have the same tubular lattice structure.

Figures 2A and 2B also show that the second part 16 of the coupling assembly 10 is provided with a second coupling element 18 that is arranged to provide a second pivot axis that is directed transversely with respect to the first pivot axis. The person skilled in the art will appreciate that by providing the second coupling element 18, an elongated connecting element of for example the first set of elongated connecting elements 9, in use of the fish farm, is also pivotable with respect to the buoyancy sleeve 5 in circumferential directions of the elongated center column. Hence, an elongated connecting element of the first set of elongated connecting elements 9 can move with respect to the buoyancy sleeve 5 in orthogonal directions, e.g. in radial directions and in circumferential directions of the elongated center column. The movements in radial and circumferential directions of the elongated center column can also be referred to as movements in pitch and yaw. These directions of movement are the most important directions regarding improvement of the life time of the connections between the elongated connecting elements of the first set of elongated connecting elements and the buoyancy sleeve. An analogous reasoning holds for the elongated connecting elements of the third set of elongated connecting elements that are pivotable with respect to the harvesting sleeve in both radial and circumferential directions of the elongated center column.

The person skilled in the art will appreciate that the second coupling element can be any suitable coupling element that can provide a second pivot axis that is directed transversely with respect to the first pivot axis and that enables the abovementioned movements of the elongated connecting elements of the first set of elongated connecting elements and the buoyancy sleeve, and the elongated connecting elements of the third set of elongated connecting elements and the harvesting sleeve.

Figures 2A and 2B show that the first part 15 and the second part 16 of the detachable and pivotable coupling assembly 10 are both provided with respective receiving elements, in this particular case holes that are configured and arranged to receive the first coupling element 17. In this way the first part 15 and the second part 16 of the coupling assembly 10 can be connected and detached. This allows for assembling the coupling assemblies and thereby semi-submersible netted cage of the fish farm when the fish farm is at its desired location. Hence, at least transportation of the fish farm is less cumbersome. The person skilled in the art will appreciate that the coupling assembly 10 also allows easy disassembly of the semi-submersible netted cage.

In the embodiment of the coupling assembly 10 shown in figures 2A and 2B, the first coupling element 17 is an elongated pin that is configured and arranged to detachably connect the first part 15 and the second part 16 of the coupling assembly 10. The second coupling element 18 is a shaft that is configured and arranged to provide the second pivot axis that is directed transversely with respect to the first pivot axis. The person skilled in the art will appreciate that the respective first 17 and second 18 coupling elements can be any suitable components that provide the respective first and second pivot axes described above.

Figure 3 shows a schematic perspective view of a first exemplary, non-limiting embodiment of a connection of two frame sections of a first set of frame sections 19 of the first frame of the semi-submersible netted rigid cage of the fish farm according to the invention. The two frame sections that have a tubular lattice structure to improve the buoyancy properties of the first frame are connected via a first connecting component 33 that also has a tubular lattice structure. Although not shown in the figures, the person skilled in the art will appreciate that the first connecting component 33 can be an integral part of an elongated connecting element of the first set of elongated connecting elements. Furthermore, although not shown in the figures, the person skilled in the art will appreciate that the first connecting element 33 can be provided with a first part of the coupling assembly that can be detachably connected with a second part of the coupling assembly that is connected with and end part of the elongated connecting element of the first set of connecting elements. The first connecting component 33 comprises a first flange 34 that is provided with a first hole 35 that is configured and arranged to receive an end part of an elongated connecting element of the second set of elongated connecting elements for interconnecting the first frame and the second frame of the semi-submersible netted rigid cage.

Figure 4 shows a schematic perspective view of a first exemplary, non-limiting embodiment of a connection of two frame sections of a second set of frame sections 20 of the second frame of the semi-submersible netted rigid cage of the fish farm according to the invention. The two frame sections that have a tubular lattice structure to improve the buoyancy properties of the second frame are connected via a second connecting component 36 that also has a tubular lattice structure. Although not shown in the figures, the person skilled in the art will appreciate that the second connecting component 36 can be an integral part of an elongated connecting element of the third set of elongated connecting elements. Furthermore, although not shown in the figures, the person skilled in the art will appreciate that the second connecting element 36 can be provided with a first part of the coupling assembly that can be detachably connected with a second part of the coupling assembly that is connected with and end part of the elongated connecting element of the third set of connecting elements. The second connecting component 36 comprises a second flange 37 that is provided with a second hole 38 that is configured and arranged to receive an end part of an elongated connecting element of the second set of elongated connecting elements for interconnecting the first frame and the second frame of the semi-submersible netted rigid cage.

The present invention can be summarized as relating to a semi-submersible spar-type offshore fish farm 1 for cultivating fish at open sea, comprising an elongated center column 2 having one of a circular and polygonal cross-section. The elongated center column comprising a first end part 3 and a second end part 4, a buoyancy sleeve 5 and a harvesting sleeve 6 that are coaxially arranged around the elongated center column, wherein the buoyancy sleeve is arrangeable at positions along the elongated center column between the first end part and the harvesting sleeve and the harvesting sleeve is arrangeable at positions along the elongated center column between the buoyancy sleeve and the second end part. Said fish farm further comprises a semi-submersible netted rigid cage 7 that is coaxially arranged around the elongated center column and comprises a first frame 8 that is coaxially arranged around the elongated center column, a first set of elongated connecting elements 9, wherein each of which is arranged to interconnect the buoyancy sleeve and the first frame via at least one detachable and pivotable coupling assembly 10, a second frame 11 that is coaxially arranged around the elongated center column and, in use of said fish farm, is arranged below the first frame, a second set of elongated connecting elements 12, wherein each of which is arranged to interconnect the first frame and the second frame, a third frame 13 that is coaxially arranged around the elongated center column at an adjustable position between the first frame and the second frame, a third set of elongated connecting elements 14, wherein each of which is arranged to interconnect the harvesting sleeve and the third frame via at least one detachable and pivotable coupling assembly.

It will be clear to a person skilled in the art that the scope of the present invention is not limited to the examples discussed in the foregoing but that several amendments and modifications thereof are possible without deviating from the scope of the present invention as defined by the attached claims. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

### REFERENCE NUMERALS

- 1: semi-submersible spar-type offshore fish farm
- 2: elongated center column
- 3: first end part
- 4: second end part
- 5: buoyancy sleeve
- 6: harvesting sleeve
- 7: semi-submersible netted rigid cage
- 8: first frame
- 9: first set of elongated connecting elements
- 10: detachable and pivotable coupling assembly
- 11: second frame
- 12: second set of elongated connecting elements
- 13: third frame
- 14: third set of elongated connecting elements
- 15: first part of the detachable and pivotable coupling assembly
- 16: second part of the detachable and pivotable coupling assembly
- 17: first coupling element
- 18: second coupling element
- 19: first set of frame sections
- 20: second set of frame sections
- 21: third set of frame sections
- 22: first platform
- 23: second platform
- 24: first net
- 25: second net
- 26: third net
- 27: fourth net
- 28: control facility
- 29: ballast system
- 30: buoyancy tank
- 31: ballast tank
- 32: clump weight
- 33: first connecting component
- 34: first flange
- 35: first hole
- 36: second connecting component
- 37: second flange
- 38: second hole
- 39: anchor cables
- 40: limiting sleeve

## Claims

1. A semi-submersible spar-type offshore fish farm (1) for cultivating fish at open sea, comprising:
- an elongated center column (2) having one of a circular and polygonal cross-section, comprising:
- a first end part (3) and a second end part (4);
- a buoyancy sleeve (5) and a harvesting sleeve (6) that are coaxially arranged around the elongated center column (2), wherein the buoyancy sleeve (5) is arrangeable at positions along the elongated center column (2) between the first end part (3) and the harvesting sleeve (6) and the harvesting sleeve (6) is arrangeable at positions along the elongated center column (2) between the buoyancy sleeve (5) and the second end part (4); and
- a semi-submersible netted rigid cage (7) that is coaxially arranged around the elongated center column (2), said cage comprising:
- a first frame (8) that is coaxially arranged around the elongated center column (2);
- a first set of elongated connecting elements (9), wherein each elongated connecting element of the first set of elongated connecting elements (9) is arranged to interconnect the buoyancy sleeve (5) and the first frame (8) via at least one detachable and pivotable coupling assembly (10);
- a second frame (11) that is coaxially arranged around the elongated center column (2) and, in use of said fish farm (1), is arranged below the first frame (8);
- a second set of elongated connecting elements (12), wherein each elongated connecting element of the second set of elongated connecting elements (12) is arranged to interconnect the first frame (8) and the second frame (11);
- a third frame (13) that is coaxially arranged around the elongated center column (2) between the first frame (8) and the second frame (11);
- a third set of elongated connecting elements (14), wherein each elongated connecting element of the third set of elongated connecting elements (14) is arranged to interconnect the harvesting sleeve (6) and the third frame (13) via at least one detachable and pivotable coupling assembly (10),
wherein the detachable and pivotable coupling assembly (10) comprises a first part (15) and a second part (16) that are detachably connectable via at least a first coupling element (17) that is arranged to provide a first pivot axis around which the first part (15) and the second part (16) are pivotable with respect to each other,
wherein at least one of the first part (15) and the second part (16) of the detachable and pivotable coupling assembly (10) is provided with at least a second coupling element (18) that is arranged to provide a second pivot axis that is directed transversely with respect to the first pivot axis.

2. The semi-submersible spar-type offshore fish farm (1) according to claim 1, wherein at least one of the first frame (8) comprises a first set of frame sections (19) that are connected to each other to form a first closed structure, the second frame (11) comprises a second set of frame sections (20) that are connected to each other to form a second closed structure, and the third frame (13) comprises a third set of frame sections (21) that are connected to each other to form a third closed structure.

3. The semi-submersible spar-type offshore fish farm (1) according to any one of the preceding claims, wherein at least one of the first frame, the second frame and the third frame have buoyant properties and have one of a circular and polygonal shape.

4. The semi-submersible spar-type offshore fish farm (1) according to any one of the previous claims, wherein the first part (15) of the detachable and pivotable coupling assembly (10) is arranged at least at one of a surface of the buoyancy sleeve (5) that in use of said fish farm faces away from the elongated center column (2), a surface of the harvesting sleeve (6) that in use of said fish farm faces away from the elongated center column (2), a surface of at least one frame section of the first set of frame sections (19) of the first frame (8), and a surface of at least one frame section of the third set of frame sections (21) of the third frame (13).

5. The semi-submersible spar-type offshore fish farm (1) according to any one of the previous claims, wherein the second part (16) of the detachable and pivotable coupling assembly (10) is arranged at least at one end part of an elongated connecting element of the first set of elongated connecting elements (9) and/or at least at one end part of an elongated connecting element of the third set of elongated connecting elements (14).

6. The semi-submersible spar-type offshore fish farm (1) according to any one of the preceding claims, wherein the semi-submersible netted rigid cage (7) has a diameter in a range between 80m and 180m.

7. The semi-submersible spar-type offshore fish farm (1) according to any one of the previous claims, wherein the elongated connecting elements of at least one of the first set of elongated connecting elements (9) and the third set of elongated connecting elements (14) have a tubular lattice structure.

8. The semi-submersible spar-type offshore fish farm (1) according to any one of the preceding claims, wherein said fish farm (1) is provided with at least one of a first platform (22) that, in use of said fish farm (1), is arranged adjacent to the elongated center column (2) and a second platform (23) that is connected with the first frame (8).

9. The semi-submersible spar-type offshore fish farm (1) according to any one of the preceding claims, wherein the first frame (8) is provided with at least a first net (24) that, in use of said fish farm (1), provides a top net of the semi-submersible netted rigid cage (7), the first frame (8) and the second frame (11) are further interconnected via at least a second net (25) that, in use of said fish farm (1), provides a circumferential side net of said cage (7), wherein the second frame (11) is provided with at least a third net (26) that, in use of said fish farm (1), provides a bottom net of said cage (7), and wherein the third frame (13) is provided with at least a fourth net (27) that, in use of said fish farm (1), provides a harvesting net of said cage (7).

10. The semi-submersible spar-type offshore fish farm (1) according to any one of the preceding claims, wherein, in use of said fish farm (1), the first frame (8) is arrangeable along the elongated center column (2) at positions above and below sea level, the second frame (11) is arrangeable along the elongated center column (2) at positions below sea level, and the third frame (13) is arrangeable along the elongated center column (2) at positions between the first frame (8) and the second frame (11).

11. The semi-submersible spar-type offshore fish farm (1) according to any one of the preceding claims, wherein the first end part (3) of the elongated center column (2) is provided with a control facility (28) that in use of said fish farm (1) remains positioned above sea level and the second end part (4) of the elongated center column (2) is provided with a ballast system (29) that in use of said fish farm (1) remains positioned below sea level, wherein the ballast system (29) comprises at least one buoyancy tank (30) and at least one of a ballast tank (31) that is connected to the buoyancy tank and at least one clump weight (32) that is connected to the buoyancy tank.

12. The semi-submersible spar-type offshore fish farm (1) according to any one of the preceding claims, wherein the semi-submersible spar-type offshore fish farm (1) comprises at least one of a harvest system, a power system, a mooring system, a boat landing system, a docking system, a dead fish removal system and a feeding system.

## Patentansprüche

1. Halbtauchbare spierenartige Off-Shore Fischzuchtanlage (1) zum Kultivieren von Fisch auf offener See, umfassend:
- eine längliche Mittelsäule (2), die eines von einem kreisförmigen und polygonalen Querschnitt aufweist, umfassend:
- ein erstes Endteil (3) und ein zweites Endteil (4);
- eine Auftriebshülse (5) und eine Erntehülse (6), die koaxial um die längliche Mittelsäule (2) herum angeordnet sind, wobei die Auftriebshülse (5) an Positionen entlang der länglichen Mittelsäule (2) zwischen dem ersten Endteil (3) und der Erntehülse (6) anordenbar ist, und wobei die Erntehülse (6) an Positionen entlang der länglichen Mittelsäule (2) zwischen der Auftriebshülse (5) und dem zweiten Endteil (4) anordenbar ist; und
- einen halbtauchbaren netzartigen starren Käfig (7), der um die längliche Mittelsäule (2) herum koaxial angeordnet ist, der Käfig umfassend:
- einen ersten Rahmen (8), der um die längliche Mittelsäule (2) herum koaxial angeordnet ist;
- einen ersten Satz von länglichen Verbindungselementen (9), wobei jedes längliche Verbindungselement des ersten Satzes von länglichen Verbindungselementen (9) angeordnet ist, um die Auftriebshülse (5) und den ersten Rahmen (8) über mindestens eine abnehmbare und schwenkbare Kopplungsanordnung (10) miteinander zu verbinden;
- einen zweiten Rahmen (11), der um die längliche Mittelsäule (2) herum koaxial angeordnet ist, und bei Verwendung der Fischzuchtanlage (1) unter dem ersten Rahmen (8) angeordnet ist;
- einen zweiten Satz von länglichen Verbindungselementen (12), wobei jedes längliche Verbindungselement des zweiten Satzes von länglichen Verbindungselementen (12) angeordnet ist, um den ersten Rahmen (8) und den zweiten Rahmen (11) miteinander zu verbinden;
- einen dritten Rahmen (13), der um die längliche Mittelsäule (2) herum zwischen dem ersten Rahmen (8) und dem zweiten Rahmen (11) koaxial angeordnet ist;
- einen dritten Satz von länglichen Verbindungselementen (14), wobei jedes längliche Verbindungselement des dritten Satzes von länglichen Verbindungselementen (14) angeordnet ist, um die Erntehülse (6) und den dritten Rahmen (13) über mindestens eine abnehmbare und schwenkbare Kopplungsanordnung (10) miteinander zu verbinden,
wobei die abnehmbare und schwenkbare Kopplungsanordnung (10) ein erstes Teil (15) und ein zweites Teil (16) umfasst, die über mindestens ein erstes Kopplungselement (17) abnehmbar verbindbar sind, das angeordnet ist, um eine erste Schwenkachse bereitzustellen, um die herum das erste Teil (15) und das zweite Teil (16) in Bezug aufeinander schwenkbar sind,
wobei mindestens eines des ersten Teils (15) und des zweiten Teils (16) der abnehmbaren und schwenkbaren Kopplungsanordnung (10) mit mindestens einem zweiten Kopplungselement (18) versehen ist, das angeordnet ist, um eine zweite Schwenkachse bereitzustellen, die in Bezug auf die erste Schwenkachse quer gerichtet ist.

2. Halbtauchbare spierenartige Off-Shore Fischzuchtanlage (1) nach Anspruch 1, wobei mindestens einer des ersten Rahmens (8) einen ersten Satz von Rahmenabschnitten (19) umfasst, die miteinander verbunden sind, um eine erste geschlossene Struktur auszubilden, wobei der zweite Rahmen (11) einen zweiten Satz von Rahmenabschnitten (20) umfasst, die miteinander verbunden sind, um eine zweite geschlossene Struktur auszubilden, und der dritte Rahmen (13) einen dritten Satz von Rahmenabschnitten (21) umfasst, die miteinander verbunden sind, um eine dritte geschlossene Struktur auszubilden.

3. Halbtauchbare spierenartige Off-Shore Fischzuchtanlage (1) nach einem der vorstehenden Ansprüche, wobei mindestens einer des ersten Rahmens, des zweiten Rahmens und des dritten Rahmens Auftriebseigenschaften aufweisen und eine von einer kreisförmigen und polygonalen Form aufweisen.

4. Halbtauchbare spierenartige Off-Shore Fischzuchtanlage (1) nach einem der vorstehenden Ansprüche, wobei das erste Teil (15) der abnehmbaren und schwenkbaren Kopplungsanordnung (10) mindestens an einer von einer Oberfläche der Auftriebshülse (5), die bei Verwendung der Fischzuchtanlage von der länglichen Mittelsäule (2) abgewandt ist, einer Oberfläche der Erntehülse (6), die bei Verwendung der Fischzuchtanlage von der länglichen Mittelsäule (2) abgewandt ist, einer Oberfläche von mindestens einem Rahmenabschnitt des ersten Satzes von Rahmenabschnitten (19) des ersten Rahmens (8), und einer Oberfläche von mindestens einem Rahmenabschnitt des dritten Satzes von Rahmenabschnitten (21) des dritten Rahmens (13), angeordnet ist.

5. Halbtauchbare spierenartige Off-Shore Fischzuchtanlage (1) nach einem der vorstehenden Ansprüche, wobei das zweite Teil (16) der abnehmbaren und schwenkbaren Kopplungsanordnung (10) mindestens an einem Endteil eines länglichen Verbindungselements des ersten Satzes von länglichen Verbindungselementen (9) und/oder mindestens an einem Endteil eines länglichen Verbindungselements des dritten Satzes von länglichen Verbindungselementen (14) angeordnet ist.

6. Halbtauchbare spierenartige Off-Shore Fischzuchtanlage (1) nach einem der vorstehenden Ansprüche, wobei der halbtauchbare netzartige starre Käfig (7) einen Durchmesser in einem Bereich zwischen 80 m und 180 m aufweist.

7. Halbtauchbare spierenartige Off-Shore Fischzuchtanlage (1) nach einem der vorstehenden Ansprüche, wobei die länglichen Verbindungselemente von mindestens einem von dem ersten Satz von länglichen Verbindungselementen (9) und dem zweiten Satz von länglichen Verbindungselementen (14) eine rohrförmige Gitterstruktur aufweisen.

8. Halbtauchbare spierenartige Off-Shore Fischzuchtanlage (1) nach einem der vorstehenden Ansprüche, wobei die Fischzuchtanlage (1) mit mindestens einer von einer ersten Plattform (22), die bei Verwendung der Fischzuchtanlage (1) angrenzend an die längliche Mittelsäule (2) angeordnet ist, und einer zweiten Plattform (23), die mit dem ersten Rahmen (8) verbunden ist, angeordnet ist.

9. Halbtauchbare spierenartige Off-Shore Fischzuchtanlage (1) nach einem der vorstehenden Ansprüche, wobei der erste Rahmen (8) mit einem ersten Netz (24) versehen ist, das bei Verwendung der Fischzuchtanlage (1) ein oberes Netz des halbtauchbaren netzartigen starren Käfigs (7) bereitstellt, wobei der erste Rahmen (8) und der zweite Rahmen (11) ferner über mindestens ein zweites Netz (25) miteinander verbunden sind, das bei Verwendung der Fischzuchtanlage (1) ein umfangsseitiges Netz des Käfigs (7) bereitstellt, wobei der zweite Rahmen (11) mit einem dritten Netz (26) versehen ist, das bei Verwendung der Fischzuchtanlage (1) ein Bodennetz des Käfigs (7) bereitstellt, und wobei der dritte Rahmen (13) mit einem vierten Netz (27) versehen ist, das bei Verwendung der Fischzuchtanlage (1) ein Erntenetz des Käfigs (7) bereitstellt.

10. Halbtauchbare spierenartige Off-Shore Fischzuchtanlage (1) nach einem der vorstehenden Ansprüche, wobei bei Verwendung der Fischzuchtanlage (1) der erste Rahmen (8) entlang der länglichen Mittelsäule (2) an Positionen über und unter Meereshöhe anordenbar ist, wobei der zweite Rahmen (11) entlang der länglichen Mittelsäule (2) an Positionen unter Meereshöhe anordenbar ist, und der dritte Rahmen (13) entlang der länglichen Mittelsäule (2) an Positionen zwischen dem ersten Rahmen (8) und dem zweiten Rahmen (11) anordenbar ist.

11. Halbtauchbare spierenartige Off-Shore Fischzuchtanlage (1) nach einem der vorstehenden Ansprüche, wobei das erste Endteil (3) der länglichen Mittelsäule (2) mit einer Steuereinrichtung (28) versehen ist, die bei Verwendung der Fischzuchtanlage (1) über Meereshöhe positioniert bleibt, und das zweite Endteil (4) der länglichen Mittelsäule (2) mit einem Ballastsystem (29) versehen ist, das bei Verwendung der Fischzuchtanlage (1) unter Meereshöhe positioniert bleibt, wobei das Ballastsystem (29) mindestens einen Auftriebstank (30) und mindestens einen Ballasttank (31) umfasst, der mit dem Auftriebsbehälter und mindestens einem Klumpengewicht (32) verbunden ist, das mit dem Auftriebstank verbunden ist.

12. Halbtauchbare spierenartige Off-Shore Fischzuchtanlage (1) nach einem der vorstehenden Ansprüche, wobei die halbtauchbare spierenartige Off-Shore Fischzuchtanlage (1) mindestens eines von einem Erntesystem, einem Leistungssystem, einem Verankerungssystem, einem Bootanlegesystem, einem Andocksystem, einem System für eine Entfernung toter Fische und einem Fütterungssystem umfasst.

## Revendications

1. Ferme piscicole en mer de type spar semi-submersible (1) pour la culture de poissons en haute mer, comprenant :
- une colonne centrale allongée (2) ayant l'une d'une section transversale circulaire et d'une section polygonale, comprenant :
- une première partie d'extrémité (3) et une seconde partie d'extrémité (4) ;
- un manchon de flottabilité (5) et un manchon de récolte (6) qui sont disposés coaxialement autour de la colonne centrale allongée (2), dans laquelle le manchon de flottabilité (5) peut être disposé à des positions le long de la colonne centrale allongée (2) entre la première partie d'extrémité (3) et le manchon de récolte (6) et le manchon de récolte (6) peut être disposé à des positions le long de la colonne centrale allongée (2) entre le manchon de flottabilité (5) et la seconde partie d'extrémité (4) ; et
- une cage rigide à filet semi-submersible (7) qui est disposée coaxialement autour de la colonne centrale allongée (2), ladite cage comprenant :
- un premier cadre (8) qui est disposé coaxialement autour de la colonne centrale allongée (2) ;
- un premier ensemble d'éléments de liaison allongés (9), dans laquelle chaque élément de liaison allongé du premier ensemble d'éléments de liaison allongés (9) est disposé pour relier entre eux le manchon de flottabilité (5) et le premier cadre (8) par l'intermédiaire d'au moins un ensemble d'accouplement détachable et pivotant (10) ;
- un deuxième cadre (11) qui est disposé coaxialement autour de la colonne centrale allongée (2) et, lors de l'utilisation de ladite ferme piscicole (1), est disposé en dessous du premier cadre (8) ;
- un deuxième ensemble d'éléments de liaison allongés (12), dans laquelle chaque élément de liaison allongé du deuxième ensemble d'éléments de liaison allongés (12) est disposé pour relier entre eux le premier cadre (8) et le deuxième cadre (11) ;
- un troisième cadre (13) qui est disposé coaxialement autour de la colonne centrale allongée (2) entre le premier cadre (8) et le deuxième cadre (11) ;
- un troisième ensemble d'éléments de liaison allongés (14), dans laquelle chaque élément de liaison allongé du troisième ensemble d'éléments de liaison allongés (14) est disposé pour relier entre eux le manchon de récolte (6) et le troisième cadre (13) par l'intermédiaire d'au moins un ensemble d'accouplement détachable et pivotant (10),
dans laquelle l'ensemble d'accouplement détachable et pivotant (10) comprend une première partie (15) et une seconde partie (16) qui peuvent être reliées de façon détachable par l'intermédiaire d'au moins un premier élément d'accouplement (17) qui est disposé pour fournir un premier axe de pivotement autour duquel la première partie (15) et la seconde partie (16) peuvent pivoter l'une par rapport à l'autre,
dans laquelle au moins l'une de la première partie (15) et de la seconde partie (16) de l'ensemble d'accouplement détachable et pivotant (10) est pourvue d'au moins un second élément d'accouplement (18) qui est disposé pour fournir un second axe de pivotement qui est dirigé transversalement par rapport au premier axe de pivotement.

2. Ferme piscicole en mer de type spar semi-submersible (1) selon la revendication 1, dans laquelle au moins l'un parmi le premier cadre (8) comprend un premier ensemble de sections de cadre (19) qui sont reliées les unes aux autres pour former une première structure fermée, le deuxième cadre (11) comprend un deuxième ensemble de sections de cadre (20) qui sont reliées les unes aux autres pour former une deuxième structure fermée, et le troisième cadre (13) comprend un troisième ensemble de sections de cadre (21) qui sont reliées les unes aux autres pour former une troisième structure fermée.

3. Ferme piscicole en mer de type spar semi-submersible (1) selon l'une quelconque des revendications précédentes, dans laquelle au moins l'un du premier cadre, du deuxième cadre, et du troisième cadre ont des propriétés de flottabilité et ont l'une d'une forme circulaire et d'une forme polygonale.

4. Ferme piscicole en mer de type spar semi-submersible (1) selon l'une quelconque des revendications précédentes, dans laquelle la première partie (15) de l'ensemble d'accouplement amovible et pivotant (10) est disposée au moins au niveau de l'une d'une surface du manchon de flottabilité (5) qui, lors de l'utilisation de ladite ferme piscicole, est orientée à l'opposé de la colonne centrale allongée (2), d'une surface du manchon de récolte (6) qui, lors de l'utilisation de ladite ferme piscicole, est orientée à l'opposé de la colonne centrale allongée (2), d'une surface d'au moins une section de cadre du premier ensemble de sections de cadre (19) du premier cadre (8), et d'une surface d'au moins une section de cadre du troisième ensemble de sections de cadre (21) du troisième cadre (13).

5. Ferme piscicole en mer de type spar semi-submersible (1) selon l'une quelconque des revendications précédentes, dans laquelle la seconde partie (16) de l'ensemble d'accouplement amovible et pivotant (10) est disposée au moins au niveau d'une partie d'extrémité d'un élément de liaison allongé du premier ensemble d'éléments de liaison allongés (9) et/ou au moins au niveau d'une partie d'extrémité d'un élément de liaison allongé du troisième ensemble d'éléments de liaison allongés (14).

6. Ferme piscicole en mer de type spar semi-submersible (1) selon l'une quelconque des revendications précédentes, dans laquelle la cage rigide à filet semi-submersible (7) a un diamètre compris dans une plage entre 80 m et 180 m.

7. Ferme piscicole en mer de type spar semi-submersible (1) selon l'une quelconque des revendications précédentes, dans laquelle les éléments de liaison allongés d'au moins l'un du premier ensemble d'éléments de liaison allongés (9) et du troisième ensemble d'éléments de liaison allongés (14) ont une structure en treillis tubulaire.

8. Ferme piscicole en mer de type spar semi-submersible (1) selon l'une quelconque des revendications précédentes, dans laquelle ladite ferme piscicole (1) est pourvue d'au moins l'une d'une première plate-forme (22) qui, lors de l'utilisation de ladite ferme piscicole (1), est disposée adjacente à la colonne centrale allongée (2), et d'une seconde plate-forme (23) qui est reliée au premier cadre (8).

9. Ferme piscicole en mer de type spar semi-submersible (1) selon l'une quelconque des revendications précédentes, dans laquelle le premier cadre (8) est pourvu d'au moins un premier filet (24) qui, lors de l'utilisation de ladite ferme piscicole (1), fournit un filet supérieur de la cage rigide à filet semi-submersible (7), le premier cadre (8) et le deuxième cadre (11) sont en outre reliés l'un à l'autre par l'intermédiaire au moins d'un deuxième filet (25) qui, lors de l'utilisation de ladite ferme piscicole (1), fournit un filet latéral circonférentiel de ladite cage (7), dans laquelle le deuxième cadre (11) est pourvu d'au moins un troisième filet (26) qui, lors de l'utilisation de ladite ferme piscicole (1), fournit un filet inférieur de ladite cage (7), et dans laquelle le troisième cadre (13) est doté d'au moins un quatrième filet (27) qui, lors de l'utilisation de ladite ferme piscicole (1), fournit un filet de récolte de ladite cage (7).

10. Ferme piscicole en mer de type spar semi-submersible (1) selon l'une quelconque des revendications précédentes, dans laquelle, lors de l'utilisation de ladite ferme piscicole (1), le premier cadre (8) peut être disposé le long de la colonne centrale allongée (2) à des positions au-dessus et en dessous du niveau de la mer, le deuxième cadre (11) peut être disposé le long de la colonne centrale allongée (2) à des positions en dessous du niveau de la mer, et le troisième cadre (13) peut être disposé le long de la colonne centrale allongée (2) à des positions entre le premier cadre (8) et le deuxième cadre (11).

11. Ferme piscicole en mer de type spar semi-submersible (1) selon l'une quelconque des revendications précédentes, dans laquelle la première partie d'extrémité (3) de la colonne centrale allongée (2) est pourvue d'une installation de commande (28) qui, lors de l'utilisation de ladite ferme piscicole (1), reste positionnée au-dessus du niveau de la mer et la seconde partie d'extrémité (4) de la colonne centrale allongée (2) est pourvue d'un système de ballast (29) qui, lors de l'utilisation de ladite ferme piscicole (1), reste positionné en dessous du niveau de la mer, dans laquelle le système de ballast (29) comprend au moins un réservoir de flottabilité (30) et au moins l'un d'un réservoir de ballast (31) qui est relié au réservoir de flottabilité et d'au moins un lest central (32) qui est relié au réservoir de flottabilité.

12. Ferme piscicole en mer de type spar semi-submersible (1) selon l'une quelconque des revendications précédentes, dans laquelle la ferme piscicole en mer de type spar semi-submersible (1) comprend au moins l'un d'un système de récolte, d'un système électrique, d'un système d'amarrage, d'un système d'accostage de bateau, d'un système d'arrimage, d'un système de retrait de poissons morts et d'un système d'alimentation.
